# EUROPEAN PATENT APPLICATION

(11) **EP 1 293 810 A1**
(43) Date of publication of application: **19.03.2003**
(21) Application number: 01307744.1
(22) Date of filing: 12.09.2001
(51) Int. Cl.: G02B 6/122, G02B 6/12

(54) **A method of producing optical waveguides in a tellurite glass**

(71) Applicant: Agilent Technologies, Inc. (a Delaware corporation), Palo Alto, CA 94303 (US)
(72) Inventor: Monchiero, Elena, 1-12051 Alba (Cuneo) (IT); Milanese, Daniel, 1-10148 Torino (IT); Cognolato, Livio, 1-10148 Torino (IT)
(74) Representative: Coker, David Graeme

(57) **Abstract**

An optical channel (OC) is produced in a tellurite glass (T) by selectively (M) exposing the glass surface to UV laser radiation (L), whereby the exposed areas define an optical channel (OC) photoinduced in the glass (T). The UV laser radiation (L) has a wavelength around 240-270 nm or around 193 nm and may be both continuous wave and pulsed laser radiation. The core of an optical waveguide (OC) can thus be produced in the tellurite glass (T), while a cladding may be provided by means of glass or polymer spinning, sol-gel or other conventional techniques.

## Description

The present invention relates to methods for producing optical waveguides.

The invention was developed by paying specific attention to its possible use for manufacturing planar optical waveguide amplifiers ("POWAs").

Planar optical waveguide amplifiers may represent an excellent solution whenever so-called "gain blocks" are required in optical networks, e.g. for metropolitan optical network applications.

The major requirements for such optical devices are low cost and compact size. High gain and low-noise performance are also regarded as significant features, even though perhaps less important than for similar devices intended for long haul applications. Large bandwidth represents another feature of interest.

Prototypes of gain blocks based on Erbium-doped silica or phosphate glasses have been recently proposed wherein the guiding region is obtained by means of current photolithographic processes or ion exchange techniques. In both cases, the manufacturing process is fairly complex while sophisticated glass formulations are required in order to achieve acceptable gain levels. Moreover, use of Erbium-doped optical devices (as disclosed e.g. in US-A-5 249 195) is mostly limited to the so-called amplifying C-band of Erbium amplifiers, i.e. the optical region between 1535 and 1960 nm. At present, no POWAs appear having been proposed for use in the L-band (1560-1610 nm).

Consequently, planar amplifiers with large bandwidth and high electro-optic conversion adapted to operate also in that band will present an important contribution to the development of gain blocks for metropolitan networks.

Specific kinds of glasses have been demonstrated for Erbium doped fiber amplifiers (EDFAs) exhibiting a very large bandwidth of at least 76 nm between 1532 and 1608 nm. In that respect, reference can be made to A. Mori, Y. Ohishi, M. Yamada, H. Ono, Y. Nishida, K. Oikawa, S. Sudo, OFC'97, PD-1; A. Mori, Y. Ohishi, M. Yamada, H. Ono, S. Sudo, ECOC 97, pag. 135 and European Union co-funded project, IST-1999-13322 LOBSTER.

The same also applies to Thulium doped fiber amplifiers (TDFAs) operating in the 1420-1500 nm region as disclosed e.g. again in European Union co-funded project, IST-1999-13322 LOBSTER or S. Shen, M. Naftaly, A. Jha, S.J. Wilson, OFC 2001, Anaheim, paper TuQ6-1.

High efficiency, probably due to the high refractive index of tellurite glass (n ≈ 2) has been shown. However, no applications to POWAs appear having proposed until now, this being possibly related to the inherent difficulty of creating channel waveguides with simple techniques in a tellurite-based POWA.

In Y. Ding et al., "Optical waveguides prepared in Er³⁺-doped tellurite glass by Ag⁺-Na⁺ ion-exchange" Proc. Photonics West 2001, Integrated Optoelectronics Devices, 20-26 Feb 2001, S. Jose' (CA, USA), paper 4282-08 - see also Proceedings of Spie vol. 4282 (2001) - an ion exchange technique applied to tellurite glasses is disclosed.

However, such techniques do not currently allow low cost devices to be manufactured, as these involve a lithographic process, which makes production of such devices complex and expensive.

Also, in US-A-5 251 062 a tellurite glass particularly usable for an amplifier or oscillator is disclosed utilising an optical fiber or other guided wave structure. Possible use of such a glass for forming a planar waveguide is disclosed which is again based on an ion exchange or similar process where other ions are diffused in from the surface to form a channel. Ion exchange is expected to occur with the alkali metal or silver and thallium thus impeding exchange with larger ions such as K, Ag and Tl which is necessary to achieve a desired difference in refractive indices.

The object of the present invention is thus to provide the method for creating channel waveguides in a tellurite-based glasses in such a way to render production of tellurite-based POWAs simple and cost-advantageous.

According to the present invention, such an object is achieved by means of a method having the features set forth in the claims which follow.

Essentially, the invention provides a simple, non-invasive technique to produce channel waveguides in tellurite glasses by photoinduction, by exploiting the photosensitivity of tellurium oxide glasses when exposed to laser radiation. The effect of laser radiation is to increase the refractive index, which enables optical channels to be obtained by "photowriting".

Producing integrated optical devices by photoinduction (photowriting) is a well known technique currently resorted to for producing photo-induced Bragg gratings in optical fibers (see e.g. EP-A-0 729 012).

The solution of the present invention takes advantage in a surprising and unexpected way of the behavior of tellurite glasses showing their electronic cut-off at around 400 nm, so that they exhibit strong absorption characteristics of UV laser wavelengths.

Even without wishing to be bound to any specific theory in that respect, the phenomenon of refractive index change thus achieved may be related to the formation of defects in the glass matrix and/or to soft glass densification. Both phenomena may lead to a significant increase of the refractive index of tellurite glasses due to electron trapping and too material density variation respectively.

The invention will now be described, by way of example only, with reference to the annexed drawings, wherein:
- Figure 1 is a schematic view showing a first solution for direct writing of optical channels in tellurite glasses, and
- Figure 2 shows an alternative solution of carrying out the invention.

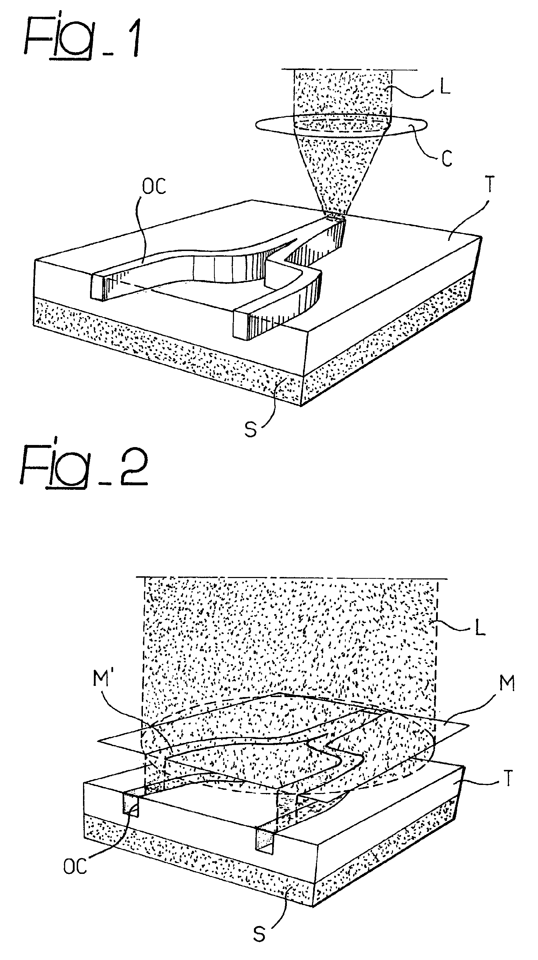

In both figures 1 and 2, reference S designates a substrate having superposed thereon a tellurite glass layer T having a smooth surface.

Substrate S can be comprised of a material such as silicon, alumina or any other glass material having mechanical properties similar to those of tellurite glass. Substrate S may also be comprised of tellurite glass itself.

In both figures, reference L designates laser radiation derived from a UV laser source. UV laser sources are well known in the art emitting both in the electromagnetic region around 240-270 nm as well as in the range of 193 nm. An excimer laser is a particularly suitable laser source to generate such a radiation in the 193 nm wavelength range.

In the arrangement shown in figure 1 laser radiation L is focused onto tellurite glass T by means of a lens C of a known type.

By producing a relative movement of the focussed UV laser beam from lens C and tellurite glass T (this can be achieved by means well known in the art which do not require to be described in detail here) exposed and unexposed areas result at the surface of glass T. Those areas of glass T which are exposed to laser radiation L define an optical channel OC which is photoinduced (i.e. "photowritten") in glass T.

In the alternative arrangement of figure 2 the UV laser beam L is not focused and a metal mask M is interposed between the laser source and glass T. Mask M includes a pattern M' transparent to the UV laser beam reproducing the geometry of the optical channel OC to be photoinduced in glass T. Again, exposed and unexposed areas are thus produced at the surface of glass T, the areas left exposed to laser radiation L by mask M defining a photoinduced optical channel OC in glass T.

In both instances, glass T can be sensitised by hydrogen loading at high pressure for some days.

The UV laser beam can be both of the continuous wave (CW) and of the pulsed type, both kinds of UV laser sources being currently available in the spectral regions indicated in the foregoing.

The approach shown in figure 2 (providing for the use of a large laser power to produce a complete exposition of the whole circuit through a metal mask allowing the laser beam to impinge onto the desired areas of glass T) appears more interesting from an industrial viewpoint due to the inherent "parallel" nature of the process.

The "sequential" approach shown in figure 1 is attractive for other applications e.g. when a wide variety of different optical channel patterns is desired.

Experimentation carried out by the applicant with the method just described has demonstrated a refractive index increase of more than 10⁻³ to be repeatably achieved. This allows i.a. short radius curves to be produced which permits guiding structures supporting he different types of optical devices to be manufactured.

The excellent spectroscopic properties of rare earth doped tellurite glasses are fully exploited by the invention since manufacture of glass is simple, just one formulation being required for the photosensitive bulk.

Since the guide core is manufactured by photoinduction, the respective cladding, such as a glass or polymer cladding, may be deposited by well-known techniques such as spinning or sol-gel. In practice, only three technological steps are necessary to produce a waveguide which contrasts dramatically with the large number of process steps involved in current photolithographic processes.

Of course, the principles of the invention remaining the same, details of construction and embodiments may widely vary with respect to what has been described and illustrated, purely by way of example, without departing from the scope of the present invention as defined in the annexed claims.

## Claims

1. A method of producing an optical channel (OC) in a tellurite glass (T), **characterised in that** it includes the steps of:
- providing a tellurite glass (T) having a smooth surface,
- selectively (C,M) exposing said tellurite glass (T) to UV laser radiation (L) to produce exposed and unexposed areas at said surface, whereby said exposed areas define said optical channel (OC), said optical channel being photoinduced in said tellurite glass (T).

2. The method of claim 1, **characterised in that** it includes the step of focusing (C) said UV laser radiation onto said exposed areas of said surface.

3. The method of claim 1, **characterised in that** it includes the steps of:
- providing unfocused UV laser radiation (L),
- providing a mask (M) having areas which are transparent (M') to said UV laser radiation, and
- exposing said tellurite glass (T) to said unfocused UV laser radiation with the interposition of said mask (M), wherein said transparent areas (M') of said mask (M) define said exposed areas of said surface.

4. The method of any of claims 1 to 3, **characterised in that** said UV laser radiation (L) has a wavelength around 240-270 nm.

5. The method of any of claims 1 to 3, **characterised in that** said UV laser radiation (L) has a wavelength around 193 nm.

6. The method of any of claims 1 to 5, **characterised in that** it includes the step of providing a pulsed laser as the source of said UV laser radiation (L) .

7. The method of any of previous claims 1 to 5, **characterised in that** said UV laser radiation (L) is a continuous wave (CW) laser radiation .

8. The method of any of the previous claims, **characterised in that** it includes the steps of:
- producing said optical channel as the core of an optical waveguide in said tellurite glass (T), and
- providing said optical waveguide with a cladding.

9. The method of claim 8, **characterised in that** said cladding is produced by means of a technique selected from the group consisting of glass or polymer spinning and sol-gel.
